# EUROPEAN PATENT SPECIFICATION

(11) **EP 4 335 672 B1**
(45) Date of publication and mention of the grant of the patent: **08.07.2026**
(21) Application number: 22194939.9
(22) Date of filing: 09.09.2022
(51) Int. Cl.: B60H 1/00

(54) **A HEATING, VENTILATION AND AIR-CONDITIONING SYSTEM**
HEIZUNGS-, LÜFTUNGS- UND KLIMAANLAGE
SYSTÈME DE CHAUFFAGE, DE VENTILATION ET DE CLIMATISATION

(43) Date of publication of application: 13.03.2024
(73) Proprietor: Valeo Electrification, 95892 Cergy Pontoise (FR)
(72) Inventor: ARAKI, Daisuke, Kumagaya-shi, 360-0193 (JP); NAGANO, Hideki, Kumagaya-shi, 360-0193 (JP); YOSHIZAKI, Hisayoshi, Kumagaya-shi, 360-0193 (JP); MITSUMOTO, Takaya, Kumagaya-shi, 360-0193 (JP)
(74) Representative: Valeo Powertrain Systems

(56) References cited:
- WO-A1-2021/038153
- WO-A1-2021/111047
- US-A1- 2009 023 374

## Description

### TECHNICAL FIELD

The present invention relates to a heating ventilation and air-conditioning system, more particularly, the present invention relates to a heating ventilation and air-conditioning for a vehicle, comprising sliding doors and drive gears.

### BACKROUND

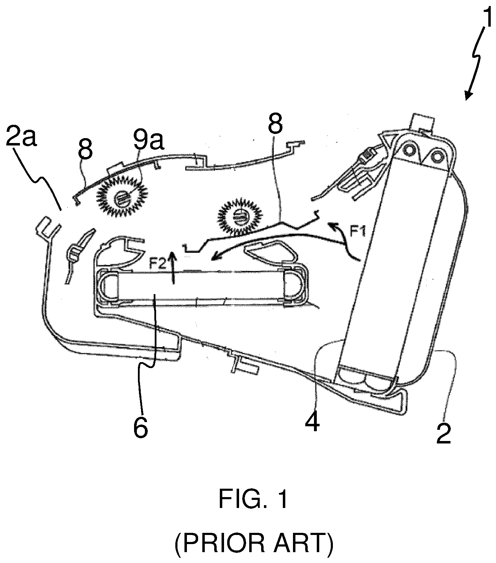

Referring to the FIG. 1, a HVAC system 1 includes a housing 2 with evaporator 4 and a heater 6 disposed inside the housing 2. The HVAC system 1 further includes a fluid-circulation means to cause pressure difference across the evaporator 4 and the heater 6 for fluid flow there across. The HVAC system 1 further includes sliding doors 8 that either act as mixing doors for controlling mixing of fluid streams from evaporator 4 and the heater 6 or are vent doors for directing fluid streams to the vents 2a. The sliding doors 8 are generally having a curved profile with serrations formed on at least one side thereof that engage with corresponding drive gears 9a to cause movement of the sliding doors 8 as the drive gears 9a rotates. The sliding doors 8 move between a blocking configuration in which the sliding doors 8 blocks air flow there across and an unblocking configuration in which the sliding doors 8 create a fluid flow passage for passage of the air.

The sliding doors 8 are generally curved and the drive gears 9a used for actuating the movement of the sliding doors 8 are disposed on the serrated side of the sliding door 8 to interact with the serrations. Generally, there are multiple sliding doors 8, wherein movement of each of the sliding doors 8 is caused by rotation of at least one corresponding drive gear 9a. The separate sliding doors 8 require separate drive gears 9a. The different drive gears 9a are generally disposed in limited space between the adjacent sliding doors 8. The packaging of the actuating gears 9a in limited space between the adjacent sliding doors 8 is a problem. In order to package the drive gears 9a between the adjacent sliding doors 8, the spacing between the sliding doors 8 is increased, however, increasing the spacing between the adjacent sliding doors 8 increases the overall size of the housing 2 and the HVAC system 1. Furthermore, generally, the vents 2a are disposed far away from fluid flow passages created by the sliding doors 8, thereby and high power blower for directing the air to the vents 2a for egress of the air through the vents 2a. Still further, few of the prior arts such as for example, WO2021/038153 A1 and WO2021/038154 A1 disclose a heating ventilation and air-conditioning system 1 comprising a housing 2 and a curved sliding door 22 for mode control, disposed within the housing 2 and arranged with the concave side thereof facing an interior of the housing 2 and the convex side protruding outwards from the housing 2, thereby causing packaging issues and increasing the over-all size of the housing 2.

Accordingly, there is a need for a HVAC system that is compact and can be conveniently packaged in a limited space, preferably in a vehicle environment. Further, there is need for a HVAC system, wherein the components thereof are strategically arranged inside a housing thereof, to achieve improved space utilization inside the housing. Further, there is a need for a HVAC system configured with the vent doors positioned to facilitate egress of air through the vents without requiring large sized and high power blower. Further, there is a need for a HVAC system that permits close packaging of the multiple sliding doors and the drive gears to render further compactness to the HVAC system.

### OBJECTS

An object of the present invention is to provide a HVAC system that is compact and that can be conveniently packaged in a limited space, preferably inside a vehicle.

Another object of the present invention is to provide a HVAC system configured with the vent doors positioned to facilitate egress of air through the vents without requiring large sized and high power blower.

Yet another object of the present invention is to provide a HVAC system that permits close packaging of the multiple sliding doors to render further compactness to the HVAC system.

### SUMMARY

A heating ventilation and air-conditioning system hereinafter referred to as HVAC system is disclosed in accordance with an embodiment of the present invention, as set out in independent claim 1. Preferred embodiments of the present invention are laid down in the appended dependent claims. The HVAC system includes a housing, an evaporator, a heater, a fluid-circulation means and multiple sliding doors. The housing receives fluid to be processed. The evaporator and the heater are disposed inside the housing, the heater being disposed spaced from the evaporator. The fluid-circulation means causes pressure difference across the evaporator and the heater for fluid flow there across. The sliding doors are disposed within the housing and around the evaporator and the heater. Each sliding door being curved and is moved by at least one drive gear to define a blocking and an unblocking configuration thereof. The distance between adjacent sliding doors is less than twice the mean diameter of the at least one drive gear.

Particularly, the serrations that engage with the drive gears are formed on side thereof facing the corresponding drive gear.

Further, the sliding doors are having different radius of curvature.

Furthermore, the sliding doors are disposed upstream of the cross car beam in the direction "A" of crash in case of front-end collision.

Particularly, the drive gears corresponding to the respective sliding doors are disposed horizontally with centres of the drive gears lying on a common horizontal axis.

Particularly, the drive gear of downstream side in the direction of the airflow defined by the fluid-circulation means is disposed lower position than the drive gear of upstream side with centres of the drive gears.

Generally, the drive gears are of same dimension.

Specifically, the drive gears are driven by a common transmission.

Particularly, the drive gears are mounted on respective drive shafts that are disposed substantially outside housing while at least a portion of the drive shafts is received inside the housing.

Generally, the travel paths followed by the first and second sliding doors define portions of concentric imaginary circles.

Particularly, at least one of the drive shafts driving the corresponding drive gears is disposed outside the housing.

Further, the vents for the egress of air from the housing is disposed proximal to and downstream of the sliding doors in the direction of the airflow defined by the fluid-circulation means.

### BRIEF DESCRIPTION

Other characteristics, details and advantages of the invention can be inferred from the description of the invention hereunder. A more complete appreciation of the invention and many of the attendant advantages thereof will be readily obtained as the same becomes better understood by reference to the following detailed description when considered in connection with the accompanying figures, wherein:
**FIG. 1** illustrates a schematic representation of a conventional HVAC system;
**FIG. 2** illustrates a schematic representation of a HVAC system of the present invention, wherein drive gears driving corresponding sliding doors are offset with respect to each other along a vertical axis;
**FIG. 3** illustrates a schematic representation of a HVAC system in accordance with another embodiment of the present invention, wherein drive gears are lying on a common horizontal axis "H".
**FIG. 4** illustrates a schematic representation of travel path followed by the first and second sliding doors define portions of concentric imaginary circles in accordance with another embodiment of the present invention.

### DETAILED DESCRIPTION

The present invention envisages a HVAC system, preferably for a vehicle, wherein the HVAC system includes a housing, an evaporator, a heater, a fluid-circulation means and multiple sliding doors. The housing receives fluid to be processed by the fluid-circulation means which is not illustrated. The evaporator and the heater are disposed inside the housing, the heater being disposed spaced from the evaporator. The fluid-circulation means causes pressure difference across the evaporator and the heater for fluid flow there across. The fluid-circulation means may be called as an air blower. The fluid is air sucked and blown out by the air blower. The sliding doors are disposed within the housing and around the evaporator and the heater. Each sliding door being curved and is moved by at least one drive gear to define a blocking and an unblocking configuration thereof. The drive gears are so arranged between the sliding doors that the distance between adjacent sliding doors is less than twice the mean diameter of the at least one drive gear. Although, the present invention is explained with example of HVAC system, wherein the sliding doors are so configured, the drive gears are strategically positioned and the drive shafts on which the drive gears are mounted are disposed substantially outside the housing to achieve packaging of the sliding doors and the drive gears in limited space inside the housing to render the HVAC system compact, however, the present invention is also applicable for other vehicular and non-vehicular applications, wherein it is required to package sliding doors and drive gears therefor in limited space.

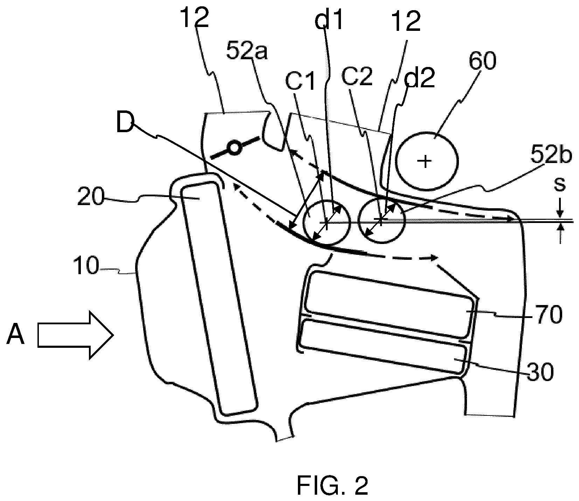

FIG. 2 illustrates a schematic representation of a HVAC system. The HVAC system includes a housing 10, an evaporator 20, a heater 30, and multiple sliding doors 50a, 50b.

Referring to the FIG. 2, the housing 10 forms of an enclosure for receiving several components for protecting the components from harsh external environment. The housing 10 is generally of plastic material and is formed by moulding. The housing 10 is either formed as a single piece or formed of multiple portions assembled together to render modular configuration to the housing 10. The modular configuration of the housing 10 is helpful for accessing an interior of the housing 10 for service and maintenance of the components received in the housing 10. The housing 10 includes an opening for ingress of the fluid inside the housing 10 and a plurality of vents 12 for egress of fluid from the housing 10. The vents 12 direct conditioned air processed by the components of the HVAC system to the interior of vehicle cabin depending on whether HVAC system is operating in foot mode, face mode, de-fogging mode or any other mode. The housing 10 receives fluid to be processed, particularly, air to be conditioned through the opening. The housing 10 receives the critical components of the HVAC system, for example, the evaporator 20 and the heater 30. The evaporator 20 cools the air passing there through and the heater 30 heats the air passing there-through. In one embodiment, the heater 30 is disposed downstream of the evaporator 20 in direction of fluid flow. The fluid after being processed by the evaporator 20 and the heater 30 are directed to the vents 12 for egress of the processed fluid from the housing 10.

The housing 10 is connected with the fluid circulation means, either a blower or a suction fan based on position of the fluid circulation means with respect to the inlet and outlet vents and with respect to the evaporator 20 and the heater 30. For example, the fluid circulation means is a blower in case the vents 12 are disposed downstream of the evaporator 20 and the heater 30 in the fluid flow direction. Similarly, the fluid circulation means is a suction fan in case the vents 12 are disposed upstream of the evaporator 20 and the heater 30 in the fluid flow direction. The fluid circulation means create pressure difference across the evaporator 20 and the heater 30 for fluid flow there across.The fluid-circulation means causes pressure difference across the evaporator 20 and the heater 30 for fluid flow there across.

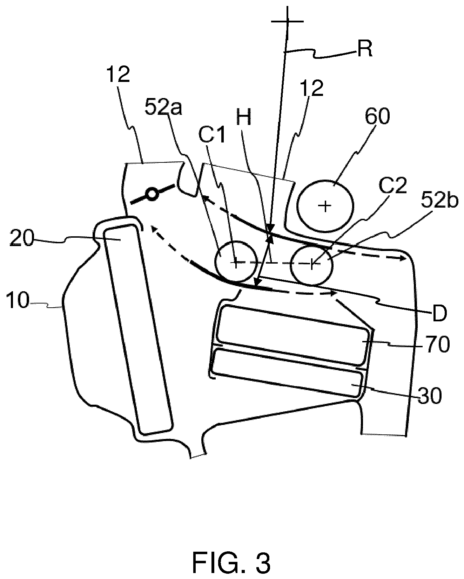

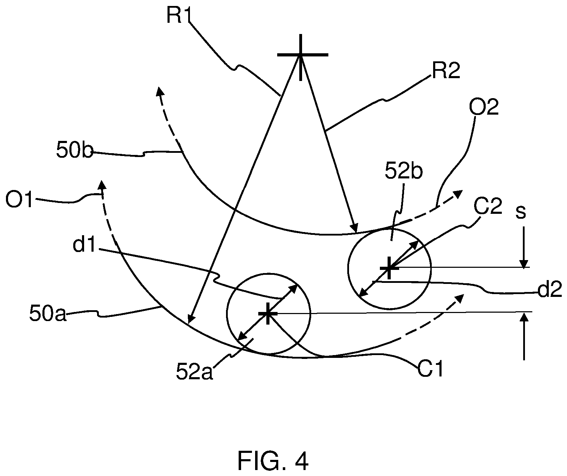

The sliding doors 50a, 50b are disposed within the housing 10 and around the evaporator 20 and the heater 30. The sliding doors 50a, 50b move between blocking and unblocking configuration to serve different purposes. In one embodiment, the sliding doors 50a, 50b move between a blocking and an unblocking configuration to direct the air to the different vents 12 based operating mode of the HVAC system. In another embodiment, the sliding doors 50a, 50b move between a blocking and an unblocking configuration to control mixing of air streams from the evaporator 20 and the heater 30 to achieve better temperature control before egress of the processed air through the vents 12. In the FIG. 2 and FIG. 3, left side vent 12 is formed as defrost opening which blow out warmed air for defrost a vehicle front window grass. In the FIG. 2 and FIG. 3, right side vent 12 is formed as vent opening which blow out conditioned air to control climate status of vehicle cabin room. Each sliding door 50a, 50b has a curved profile and is moved by at least a drive gear 52a (a first drive gear 52a) and a drive gear 52b (a second drive gear 52b), and to define the blocking configuration and the unblocking configuration of the sliding doors 50a, 50b. In the blocking configuration, the sliding doors 50a, 50b abut against or contact inside walls of the housing 10 to block airflow across the sliding doors 50a, 50b. In the unblocking configuration of the sliding doors 50a,50b, the sliding doors 50a,50b allow airflow through gap between the sliding doors 50a, 50b and inside walls of the housing 10. At least one of the sliding doors 50a, 50b is formed with serrations that engage with the drive gears 52a, 52b to cause sliding movement of the sliding doors 50a, 50b. The serrations are formed on the side of sliding door 50a, 50b facing the corresponding drive gear 52a, 52b and the corresponding drive gears 52a, 52b engages with the sliding door 50a, 50b to cause movement thereof. In one embodiment, there are two sliding doors 50a and 50b as illustrated in FIG. 2 and FIG. 3. The first sliding door 50a is moved by the first gear 52a engaging with serrations formed on the concave side of the first sliding door 50a. The second sliding door 50b is moved by the second drive gear 52b engaging with serrations formed on the convex side of the second sliding door 50b. The sliding doors 50a, 50b moves along the orbits O1 and O2 as the respective drive gears 52a, 52b rotates. In one example, there are multiple sliding doors disposed inside the housing 10. The first sliding door 50a and the second sliding door 50b are having different radius of curvature R1 and R2 respectively. The first and second sliding doors 50a and 50b respectively follow travel paths or orbits O1 and O2 that define portions of concentric imaginary circles as illustrated in FIG. 4.

Various provisions are provided to package the sliding doors 50a, 50b and the drive gears 52a, 52b within limited space inside the housing 10 to improve space utilization inside the housing 10 and render the HVAC system compact. For example, the sliding doors 50a, 50b are closely packed with respect to each other. Generally, the drive gears 52a, 52b disposed between the sliding doors 50a, 50b and cause the sliding doors 50a, 50b to be sufficiently spaced apart from each other to accommodate the drive gears 52a, 52b between the adjacent sliding doors 50a, 50b. However, to ensure close packaging of the sliding doors 50a, 50b with respect to each other, the drive gears 52a, 52b are strategically positioned between the adjacent sliding doors 50a, 50b.

Particularly, the distance "s" between centres C1 and C2 of the drive gears 52a and 52b corresponding to the respective first and second sliding doors 50a and 50b along a vertical axis "V" is less than mean diameter d1,d2 of at least one of the drive gears 52a and 52b. With such configuration, the distance "D" between adjacent sliding doors 50a, 50b is less than twice the mean diameter of the at least one drive gear. Particularly, the drive gears 52a and 52b for moving the sliding doors 50a and 50b are horizontally disposed side by side. Preferably, the drive gears 52a and 52b corresponding to the respective sliding doors 50a and 50b are disposed horizontally with centres C1 and C2 of the drive gears 52a and 52b lying on a common horizontal axis "H". With such placement of the drive gears 52a and 52b, the spacing between the sliding doors 50a and 50b is equal to mean diameter of at least one of the drive gears 52a and 52b and the sliding doors 50a and 50b can be disposed close to each other. For example, in case the first and the second drive gears 52a and 52b are of equal diameter "d" then the spacing between the first and second sliding doors 50a and 50b is equal to the diameter "d". Accordingly, the sliding doors 50a and 50b can be packaged close to each other to better utilize the space inside the housing 10 and substantially downsizing the HVAC system. Moreover, if the centre of the drive gear 52b is positioned more lower side than the centre of the drive gear 52a, such arrangement contributes to further downsize the HVAC system.

In order to further downsize the HVAC system, the at least one of the sliding doors 50a, 50b is arranged inside the housing 10 with convex side thereof facing an interior of the housing 10. With such configuration, the HVAC system is rendered compact, thereby permitting packaging of the HVAC system within limited space in vehicular environment without interfering with adjacent components.

Other provisions are also provided for further downsizing the HVAC system. In accordance with an embodiment, the different drive gears 52a, 52b for moving the different sliding doors 50a, 50b are driven by a common transmission and common drive instead of separate transmissions and drives for driving the different drive gears 52a, 52b. Also, the respective drive shafts on which the different drive gears 52a, 52b are mounted are disposed substantially outside housing while at least a portion of the drive shafts is received inside the housing 10.

Further, the vents 12 for the egress of air from the housing 10 are disposed proximal to and downstream of the sliding doors 50a, 50b in the direction of the airflow defined by the fluid-circulation means. Such configuration of the vents 12 permit unrestricted egress of the conditioned fluid from the housing 10 without requiring large or high powered blower.

Furthermore, in accordance with an embodiment of the present invention, the sliding doors 50a, 50b, the drive gears 52a, 52b for moving the sliding doors 50a, 50b, the transmission and drive for the drive gears 52a, 52b are disposed upstream of the cross car beam 60 in the direction "A" of crash in front end collision. It is possible to set the HVAC in the vehicle that has narrow space for the HVAC.

Obviously, numerous modifications and variations of the present invention are possible in light of the above teachings. It is therefore to be understood that the invention may be practiced otherwise than as specifically described herein.

## Claims

1. A heating ventilation and air-conditioning system comprising:
• a housing (10) adapted to receive a fluid to be processed;
• an evaporator (20) disposed within the housing (10);
• a heater (30) disposed within the housing (10) spaced from the evaporator (20);
• a fluid-circulation means adapted to cause pressure difference across the evaporator (20) and the heater (30) for fluid flow there across;
• a first sliding door (50a) for temperature control disposed within the housing (10) and around the evaporator (20) and the heater (30), being curved and adapted to be moved by a first drive gear for temperature control (52a);
• a second sliding door (50b) for mode control disposed within the housing (10) and downstream side of the first sliding door (50a), being curved and adapted to be moved by a second drive gear for mode control (52b), to define a blocking and an unblocking configuration thereof to direct the fluid to a vent (12) for egress of the fluid from the housing (10), wherein the first sliding door (50a) is moved by the first drive gear (52a) engaging with serrations formed on the concave side of the first sliding door (50a), a distance "s" between centres (C1, C2) of the first drive gear (52a) and the second drive gear (52b) along a vertical axis "V" being less than the mean diameter (d1,d2) of at least one of the drive gears (52a, 52b) and the first sliding door (50a) being arranged inside the housing (10) with the convex side thereof facing an interior of the housing (10), **characterized in that** the second sliding door (50b) is arranged with the convex side thereof facing the interior of the housing (10), and the second sliding door (50b) is moved by the second drive gear (52b) engaging with serrations formed on the convex side of the second sliding door (50b).

2. The HVAC system according to Claim 1, wherein a distance "D" between the first sliding door (50a) and the second sliding door (50b) is less than twice the mean diameter (d1, d2) of the at least one of the drive gears (52a, 52b).

3. The HVAC system according to Claim 1, wherein the first drive gear (52a) and the second drive gear (52b) are disposed horizontally with centres (C1, C2) of the first drive gear (52a) and the second drive gear (52b) lying on a common horizontal axis "H".

4. The HVAC system according to Claim 1, wherein the centre (C2) of the second drive gear (52b) is disposed at a lower position than the centre (C1) of the first drive gear (52a).

5. The HVAC system as claimed in any of the preceding claims, wherein the first sliding door (50a) and the second sliding door (50b) have different radius of curvature "R1" and "R2".

## Patentansprüche

1. Heizungs-, Lüftungs- und Klimaanlage, umfassend:
- ein Gehäuse (10), das dazu geeignet ist, ein zu verarbeitendes Fluid aufzunehmen;
- einen Verdampfer (20), der innerhalb des Gehäuses (10) angeordnet ist;
- eine Heizvorrichtung (30), die innerhalb des Gehäuses (10) mit Abstand zum Verdampfer (20) angeordnet ist;
- ein Fluidzirkulationsmittel, das dazu geeignet ist, eine Druckdifferenz über den Verdampfer (20) und die Heizvorrichtung (30) zu erzeugen, um einen Fluidstrom darüber zu bewirken;
- eine erste Schiebetür (50a) zur Temperaturregelung, die innerhalb des Gehäuses (10) und um den Verdampfer (20) und die Heizvorrichtung (30) herum angeordnet ist, gekrümmt ist und dazu geeignet ist, durch ein erstes Antriebszahnrad zur Temperaturregelung (52a) bewegt zu werden;
- eine zweite Schiebetür (50b) zur Modussteuerung, die innerhalb des Gehäuses (10) und auf der stromabwärtigen Seite der ersten Schiebetür (50a) angeordnet ist, gekrümmt ist und dazu geeignet ist, durch ein zweites Antriebszahnrad zur Modussteuerung (52b) bewegt zu werden, um eine Sperr- und eine Entsperrkonfiguration davon zu definieren, um das Fluid zu einer Entlüftungsöffnung (12) zum Austritt des Fluids aus dem Gehäuse (10) zu leiten, wobei die erste Schiebetür (50a) durch das erste Antriebszahnrad (52a) bewegt wird, das in Verzahnungen eingreift, die auf der konkaven Seite der ersten Schiebetür (50a) ausgebildet sind, ein Abstand "s" zwischen den Mittelpunkten (C1, C2) des ersten Antriebszahnrads (52a) und des zweiten Antriebszahnrads (52b) entlang einer vertikalen Achse "V" kleiner ist als der mittlere Durchmesser (d1, d2) von mindestens einem der Antriebszahnräder (52a, 52b) und die erste Schiebetür (50a) innerhalb des Gehäuses (10) so angeordnet ist, dass ihre konvexe Seite einem Innenraum des Gehäuses (10) zugewandt ist, **dadurch gekennzeichnet, dass** die zweite Schiebetür (50b) so angeordnet ist, dass ihre konvexe Seite dem Innenraum des Gehäuses (10) zugewandt ist, und die zweite Schiebetür (50b) durch das zweite Antriebszahnrad (52b) bewegt wird, das in Verzahnungen eingreift, die auf der konvexen Seite der zweiten Schiebetür (50b) ausgebildet sind.

2. HLK-System nach Anspruch 1, wobei ein Abstand "D" zwischen der ersten Schiebetür (50a) und der zweiten Schiebetür (50b) kleiner ist als das Zweifache des mittleren Durchmessers (d1, d2) von mindestens einem der Antriebszahnräder (52a, 52b).

3. HLK-System nach Anspruch 1, wobei das erste Antriebszahnrad (52a) und das zweite Antriebszahnrad (52b) horizontal angeordnet sind, wobei die Mittelpunkte (C1, C2) des ersten Antriebszahnrads (52a) und des zweiten Antriebszahnrads (52b) auf einer gemeinsamen horizontalen Achse "H" liegen.

4. HLK-System nach Anspruch 1, wobei der Mittelpunkt (C2) des zweiten Antriebszahnrads (52b) tiefer angeordnet ist als der Mittelpunkt (C1) des ersten Antriebszahnrads (52a).

5. HLK-System nach einem der vorhergehenden Ansprüche, wobei die erste Schiebetür (50a) und die zweite Schiebetür (50b) unterschiedliche Krümmungsradien "R1" und "R2" aufweisen.

## Revendications

1. Système de chauffage, ventilation et climatisation comprenant :
- un boîtier (10) adapté pour recevoir un fluide à traiter ;
- un évaporateur (20) disposé à l'intérieur du boîtier (10) ;
- un dispositif de chauffage (30) disposé à l'intérieur du boîtier (10) et espacé de l'évaporateur (20) ;
- un moyen de circulation de fluide adapté pour provoquer une différence de pression à travers l'évaporateur (20) et le dispositif de chauffage (30) pour permettre l'écoulement du fluide à travers ceux-ci ;
- une première porte coulissante (50a) pour le contrôle de la température, disposée à l'intérieur du boîtier (10) et autour de l'évaporateur (20) et du dispositif de chauffage (30), étant courbée et adaptée pour être déplacée par un premier engrenage d'entraînement pour le contrôle de la température (52a) ;
- une deuxième porte coulissante (50b) pour le contrôle du mode, disposée à l'intérieur du boîtier (10) et en aval de la première porte coulissante (50a), étant courbée et adaptée pour être déplacée par un deuxième engrenage d'entraînement pour le contrôle du mode (52b), afin de définir une configuration de blocage et de déblocage de celle-ci pour diriger le fluide vers une bouche d'aération (12) permettant la sortie du fluide hors du boîtier (10), dans lequel la première porte coulissante (50a) est déplacée par le premier engrenage d'entraînement (52a) s'engageant avec des dentelures formées sur le côté concave de la première porte coulissante (50a), une distance « s » entre les centres (C1, C2) du premier engrenage d'entraînement (52a) et du deuxième engrenage d'entraînement (52b) le long d'un axe vertical « V » étant inférieure au diamètre moyen (d1, d2) d'au moins l'un des engrenages d'entraînement (52a, 52b) et la première porte coulissante (50a) étant disposée à l'intérieur du boîtier (10) avec son côté convexe faisant face à l'intérieur du boîtier (10), **caractérisé en ce que** la deuxième porte coulissante (50b) est disposée avec son côté convexe faisant face à l'intérieur du boîtier (10), et la deuxième porte coulissante (50b) est déplacée par le deuxième engrenage d'entraînement (52b) s'engageant avec des dentelures formées sur le côté convexe de la deuxième porte coulissante (50b).

2. Le système CVC selon la Revendication 1, dans lequel une distance « D » entre la première porte coulissante (50a) et la deuxième porte coulissante (50b) est inférieure au double du diamètre moyen (d1, d2) d'au moins l'un des engrenages d'entraînement (52a, 52b).

3. Le système CVC selon la Revendication 1, dans lequel le premier engrenage d'entraînement (52a) et le deuxième engrenage d'entraînement (52b) sont disposés horizontalement avec les centres (C1, C2) du premier engrenage d'entraînement (52a) et du deuxième engrenage d'entraînement (52b) se trouvant sur un axe horizontal commun « H ».

4. Le système CVC selon la Revendication 1, dans lequel le centre (C2) du deuxième engrenage d'entraînement (52b) est disposé à une position inférieure à celle du centre (C1) du premier engrenage d'entraînement (52a).

5. Le système CVC selon l'une quelconque des revendications précédentes, dans lequel la première porte coulissante (50a) et la deuxième porte coulissante (50b) ont des rayons de courbure différents « R1 » et « R2 ».
